# EUROPEAN PATENT SPECIFICATION

(11) **EP 0 697 070 B1**
(45) Date of publication and mention of the grant of the patent: **05.07.2000**
(21) Application number: 94913046.2
(22) Date of filing: 19.04.1994
(51) Int. Cl.: F16B 12/44, A47B 9/18, A47C 3/38, F16B 12/24

(54) **A CONNECTION BETWEEN FURNITURE LEGS**
VERBINDUNG ZWISCHEN MÖBELBEINEN
RACCORD ENTRE PIEDS DE MEUBLE

(30) Priority: 19.04.1993 DK 300205
(43) Date of publication of application: 21.02.1996
(73) Proprietor: JENSEN, Henning Lykke, DK-8700 Horsens (DK)
(72) Inventor: JENSEN, Henning Lykke, DK-8700 Horsens (DK)
(74) Representative: Skoett-Jensen, Knud
(86) International application number: DK9400154
(87) International publication number: WO9424441

(56) References cited:
- FR-A- 1 331 299
- FR-A- 1 426 294
- GB-A- 1 133 931

## Description

The invention concerns a connection which enables a stable extension of furniture legs.

Connection methods are known for furniture legs, such as from Danish Utility Model DK92 00086 U3 which outwardly appears with as few disturbing elements as possible. The connection described in the said publication is strong and good, but the best stability is obtained when the tolerances are small, and when the material of the furniture leg proper is wood, these will be exceeded when the humidity changes. Ideally the connection occurs between pieces of wood which have been cut out of one and the same trunk of one and the same tree, and this is only possible in exceptional cases. Hence there is a need for a connection which displays the same advantages as to strength, which are just as easy or easier to establish but which does not have such large requirements as to tolerance.

It has been realized that tolerances on length (i.e. along the fibres) of wood are much easier to keep than tolerances across the fibres, even with varying degrees of humidity. Hence there is a possibility that a connection which is capable of pulling two lenghts of wood towards each other end to end may be made with close tolerances. There is a need for a force which is so large that the connection appears as an unbroken piece of wood, possibly larger. This is obtained in a connection for furniture legs according to the invention which is particular in that it comprises a cylindrical bore in the axis of each furniture leg, into which fits a pullrod with at least one radial through hole and a recess on one side of it, that at least one bushing with a hole which fits closely around the pullrod is fitted in at least one crosswise disposed well in the furniture legs, and that at least one pointed screw is placed in a threaded hole which is perpendicular to the hole of the bushing. When the pointed screw is tightened, its point cooperates with the recess and presses the bushing against that part of the well which is closest to the end of the furniture leg.

Since it is necessary that the steel rod is fastened securely in both furniture legs, but may at the same time be removed completely, a preferred embodiment has two through holes, bushings, and pointed screws, whereby the distance between the bushings is greater than the distance between the centre lines of the radial through holes in the steel rod.

A further advantageous construction is obtained when the pointed screws are made of steel and with an angle which corresponds closely to the recesses in the through holes in the steel rod. Thus it is obtained that tightening the pointed screw will cause a secure tight connection without wear on the parts of the construction.

An advantageous construction is obtained in that the steel rod has a further length further out from the through holes which corresponds to the length of the bushings fitted into the wells. Thereby an assurance of maintaining stiffness is obtained which is partly based on the fact that it is prevented that the steel rod bends when the pointed screws are tightened.

An important feature of the invention is that the rear end of the said bushing, i.e. the end portion projecting outwardly from the diametrical hole therein opposite to the screw receiving end thereof, has a substantial length amounting to approximately the same axial length as that of the bushing part receiving the screw at the other side of the diametrical hole. For one thing, this contributes to the bushing being able to resist a very hard tightening of the screw against the pullrod, and for another thing the elongated rear end of the bushing serves to distribute the strong joining pressure over a wider surface area of the lateral well, implying a more symmetrical pressure distribution and a reduced local deformation of the wood taking up the high clamping force.

A joint utilising the features of the pre-characterising part of claim 1 is known from FR-A-1331299.

The invention will be described in greater detail in the following with reference to the drawing, in which
Fig. 1 shows a general arrangement of a furniture leg with an extension, and
Fig. 2 shows a longitudinal section through a connection according to the invention.

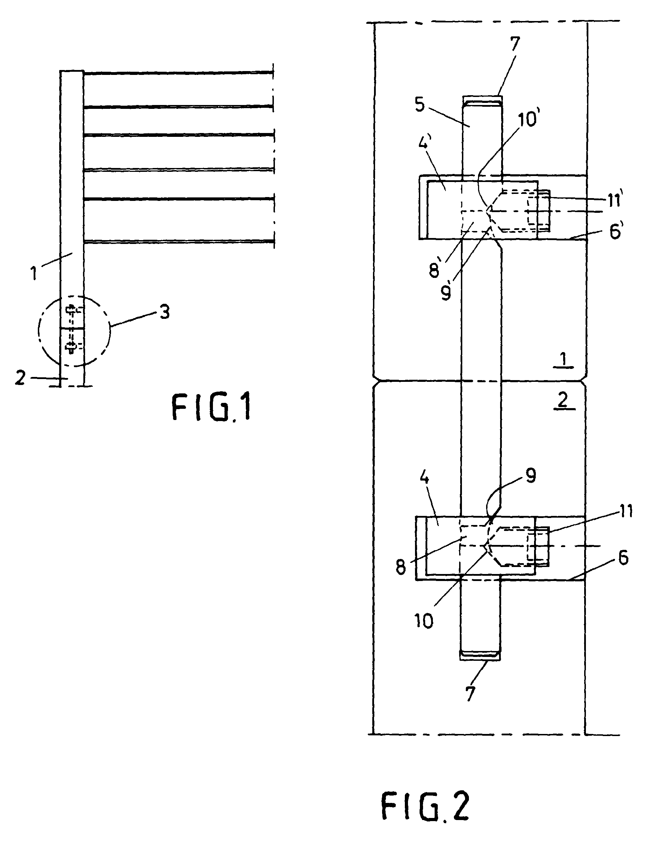

In Fig. 1 is shown a leg 1 of a bed with an extension 2 which must be connected in a stiff and rotation resistant manner to 1. This is obtained in the connection 3 which is shown in almost full size in Fig. 2. The stability against rotation is obtained by means of bushings 4, 4 which in their tightened condition are fitted in a rotation resistant manner to the through rod 5 and the leg 1 and the extension 2 at the wells 6, 6 which have been drilled from the side. The rod 5 fits closely in a cylindrical bore 7 in the axis of the bed leg 1 and the extension 2 with a tolerance which is as narrow as possible with regard to the fact that the rod must be able to be fitted and removed again. The rod 5 has radial through holes 8,8 which at one end have recesses 9, 9 . These cooperate with points 10, 10 on pointed screws 11, 11 which are fitted in threads in the bushings 4, 4 . The bushings may be cylindrical or square, and they are provided with through hole of the same diameter as the rod 5 and at right angles to it, and the thread mentioned for the pointed screw 11, 11 has been cut in the lenghtwise direction in the said bushing. The bushings fit in the wells 6, 6 which may be drilled or cut, dependent on whether the bushings are cylindrical or square. The rod 5 and the bore 7 have been extended away from the joint with a length L which corresponds to the length of the bushings 4, 4 and which a.o. serves to distribute the considerable side force which the end of the rod 5 is subjected to during the tightening, in particular because the cross section of the rod has been weakened because of the through holes 8, 8 .

During assembly the bushing 4 is introduced into the well 6, and the rod 5 is put into the through hole of the bushing through the bore 7 inn the leg extension 2, whereafter the pointed screw 11 is screwed in without tightening. The bushing 4 is introduced into the well 6 , and the part of the rod 5 which protrudes from the extension 2 is introduced into the bed leg and through the trough hole in the bushing 4 . Hereupon the pointed screw 11 is tightened, until a suitable torque has been reached. Since the points 10, 10 are not to bottom in the two recesses, it is possible to absorb possible deviations from the specified length of the bed leg 1 and the extension 2, and the angle of the point establishes a large force lengthwise along the bed leg through the rod 5. The top angle of the point determines the lever ratio between the torque of the pointed screw and the pulling force (taking the friction into account), and the material for the rod and the pointed screw, preferably steel, ensures that the screw not just bites into the rod. This would admittedly ensure that a certain rotation resistance were obtained, but the pulling force would be reduced.

In case it is no longer necessary to have an extended bed leg, e.g. because bunk beds are no longer to be used in this manner, but next to each other, the connection may be taken apart again and removed.

## Claims

1. A wooden furniture leg joint comprising two superimposed leg parts (1,2) joined end to end in a releasable joint by means of a joining fitting of the type comprising a pullrod (5) secured to at least one of the leg parts, stretching through a cylindrical bore (7) in the axis of the meeting end portions of the leg parts and with snug fit through a diametrical hole in a cross bushing (4), which is inserted in a lateral well (6) in the leg part near the end thereof and has an axial, threaded bore extending between the diametrical hole and the end of the bushing that is accessible through the said well, this threaded bore serving to receive a pointed screw (10,11), the pointed end (10) of which cooperates with a recess (9) at one end of a radial through hole (8) in the pullrod (15) to the effect that a screwing in of the screw (11) results in a perpendicular axial displacement of the pullrod (5) inwardly into the leg part for dragging the joined parts together, characterised in that the pullrod (5), also a portion thereof extending with a noticeable overlength beyond the said through hole (8) and corresponding to the length magnitude of the bushing (4), is received with snug fit in the central bore (7) in the end of the leg part, and that the rear end of the bushing, i.e. the end portion projecting outwardly from the diametrical hole therein opposite to the screw receiving end thereof, has a substantial length amounting to approximately the same axial length as that of the bushing part receiving the said screw at the other side of the diametrical hole.

2. A furniture leg joint according to claim 1, in which the pointed screw (11), though strongly tightened, engages only the side portion of the pullrod through hole (8,9) located at the rear side of the screw (11) viewed from the meeting plane of the leg ends.

3. A furniture leg joint according to claim 1, in which the pullrod (5) is held in the indicated manner in both of the leg parts (1,2), the distance between the lateral wells (6) in the leg parts being somewhat larger than the distance between the opposed through holes (8,9) in the pullrod (5).

4. A furniture leg joint according to any of the claims 1-3, in which at least the pullrod (15) and the pointed screw (10,11) are made of steel.

5. A fitting for end-to-end joining of furniture leg parts and of the type comprising a pullrod (5) having means at both ends for being secured to the respective leg parts so as to project from a central cylindrical bore (7) therein, said securing means at least at one end of the rod comprising a cross bushing (4) with a diametrical throughhole for receiving the pullrod (5) with snug fit and with a threaded screwhole extending axially between one end of the bushing (4) and the said throughhole, said screwhole receiving a pointed screw (10,11) for engaging in a recess (9) at the end of a radial through hole (8) in the pullrod (5), characterised in that both the bushing (4) and the pointed screw (10,11) are made of steel and that the bushing (4), opposite to its screw hole end, has an axial dimension away from the throughhole substantially corresponding to the axial dimension of the screw hole end, while the free end of the pullrod outside of the throughhole (8) thereof has a noticeable overlength corresponding to the length magnitude of the bushing (4).

6. A fitting according to claim 5 in which also at the other end portion of the pullrod (5) is provided, in the same manner, with a through hole (8,9), a bushing (14) and a pointed screw (10,11).

## Patentansprüche

1. Verbindung für ein Möbelbein aus Holz, umfassend zwei aneinandergereihte Beinteile (1, 2), die der Länge nach in lösbarer Verbindung mittels einer derartigen Verbindungseinrichtung verbunden sind, die einen an wenigstens einem der Beinteile befestigten Zugstab (5) umfaßt, der sich in der Achse der zusammentreffenden Endabschnitte der Beinteile durch eine zylindrische Bohrung (7) und im Paßsitz durch ein diametrales Loch in einer Kreuzbuchse (4) erstreckt, die in ein seitliches Senkloch (6) in dem Beinteil in der Nähe des Endes des Beinteils eingesetzt ist und eine axiale Gewindbohrung aufweist, die sich zwischen dem diametralen Loch und dem Ende der Buchse erstreckt, das durch das Senkloch zugänglich ist, wobei die Gewindebohrung zur Aufnahme einer spitzzulaufenden Schraube (10, 11) dient, deren spitzzulaufendes Ende (10) mit einem Rezeß an einem Ende eines radialen Durchgangsloches (8) in dem Zugstab (5) derart zusammenwirkt, daß ein Einschrauben der Schraube (11) eine senkrechte axiale Verschiebung des Zugstabes (5) noch innen in das Beinteil zum Zusammenziehen der verbundenen Teile zur Folge hat, **dadurch gekennzeichnet**, daß der Zugstab (5), ein Abschnitt desselben sich auch mit beachtlicher Überlänge über das Durchgangsloch (8) hinaus erstreckt und dem Längenmaß der Buchse (4) entspricht, im Paßsitz in der zentralen Bohrung (7) in dem Ende des Beinteils aufgenommen wird, und daß das rückwärtige Ende der Buchse, d.h. der Endabschnitt, der von dem in der Buchse vorgesehen diametralen Loch nach außen, gegenüberliegend zu dem die Schraube aufnehmenden Ende der Buchse hervorsteht, eine wesentliche Länge aufweist, die sich auf etwa dieselbe Länge wie die des Buchsenteils beläuft, der die Schraube an der anderen Seite des diametralen Loches aufnimmt.

2. Möbelbeinverbindung nach Anspruch 1, wobei die spitzzulaufende Schraube (11), obwohl fest angezogen, nur an dem Seitenabschnitt des Zugstab-Durchgangloches (8, 9) angreift, der, von der Stoßfläche der Beinenden aus betrachtet, an der rückwärtigen Seite der Schraube (11) gelegen ist.

3. Möbelbeinverbindung nach Anspruch 1, wobei der Zugstab (5) in der gekennzeichneten Art in beiden Beinteilen (1, 2) gehalten wird, wobei der Abstand zwischen den seitlichen Senklöchern (6) in den Beinteilen etwas größer als der Abstand zwischen den gegenüberliegenden Durchgangslöchern (8, 9) in dem Zugstab (5) ist.

4. Möbelbeinverbindung nach einem der Ansprüche 1 bis 3, wobei wenigstens der Zugstab (5) und die spitzzulaufende Schraube (10, 11) aus Stahl bestehen.

5. Einrichtung zur Verbindung von Möbelbeinteilen der Länge nach, wobei die Einrichtung derart ist, daß sie einen Zugstab (5) umfaßt, der an beiden Enden zum Befestigen an den jeweiligen Beinteilen Mittel aufweist, um aus einer zentralen zylindrischen Bohrung (7) in den Beinteilen hervorzuragen, wobei die Befestigungsmittel wenigstens an einem Ende des Stabes eine Kreuzbuchse (4) mit einem diametralen Durchgangsloch zur Aufnahme des Zugstabes (5) im Paßsitz und mit einem Gewindeschraubloch umfassen, das sich axial zwischen dem einen Ende der Buchse (4) und dem Durchgangsloch erstreckt, wobei das Schraubloch eine spitzzulaufende Schraube (10, 11) zum Eingriff in einen Rezeß (9) an dem Ende eines radialen Durchgangsloches (8) in dem Zugstab (5) aufnimmt, **dadurch gekennzeichnet**, daß sowohl die Buchse (4) als auch die spitzzulaufende Schraube (10, 11) aus Stahl bestehen, und daß die Buchse (4) an ihrem dem Schraubloch gegenüberliegenden Ende eine von dem Durchgangsloch weg gerichtete Axialdimension aufweist, die im wesentlichen der Axialdimension des Schraublochendes entspricht, während das freie Ende des Zugstabes außerhalb des Durchgangsloches (8) desselben eine beachtliche Überlänge aufweist, die dem Längenmaß der Buchse (4) entspricht.

6. Einrichtung nach Anspruch 5, bei der auch an dem anderen Endabschnitt des Zugstabes (5) in der gleichen Weise ein Durchgangsloch (8, 9), eine Buchse (4) und eine spitzzulaufende Schraube (10, 11) vorgesehen sind.

## Revendications

1. Assemblage de pieds de meuble en bois comprenant deux parties de pieds superposés (1,2) assemblés bout à bout en un assemblage libérable par l'intermédiaire d'un montage par assemblage du type comprenant une tige de traction (5) fixée à au moins une des parties de pied, s'étendant à travers un alésage cylindre (7) dans l'axe des portions d'extrémité de jonction des parties de pieds et avec ajustement à travers un trou diamétral dans une douille transversale (4), qui est insérée dans un perçage latéral (6) dans la partie de pied proche de son extrémité et présente un alésage taraudé axial s'étendant entre le trou diamétral et l'extrémité de la douille, qui est accessible à travers ledit perçage, cet alésage taraudé servant à recevoir une vis pointeau (10,11), dont l'extrémité pointue (10) coopère avec un évidement (9) au niveau d'une extrémité d'un trou traversant radial (8) dans la tige de traction (15) avec pour effet qu'un vissage de la vis (11) entraîne un déplacement axial perpendiculaire de la tige de traction (5) intérieurement dans la partie de pied pour entraîner ensemble les parties assemblées,
caractérisé en ce que la tige de traction (5), également une portion de celle-ci s'étendant avec une surlongueur remarquable au-delà dudit trou traversant (8) et correspondant à la longueur de la douille (4), est reçue avec ajustement dans l'alésage central (7) dans l'extrémité de la partie de pied, et en ce que l'extrémité arrière de la douille, c'est-à-dire la portion d'extrémité faisant saillie extérieurement du trou diamétral opposé à la vis recevant son extrémité, présente une longueur substantielle équivalente à approximativement la même longueur axiale que celle de la partie de douille recevant ladite vis au niveau de l'autre côté du trou diamétral.

2. Assemblage de pieds de meuble selon la revendication 1, dans lequel la vis pointeau (11), bien qu'elle soit fortement serrée, engage seulement la portion latérale du trou traversant de la tige de traction (8,9) située au niveau du côté arrière de la vis (11) vu à partir du plan de jonction des extrémités des pieds.

3. Assemblage de pieds de meuble selon la revendication 1, dans lequel la tige de traction (5) est maintenue de la manière indiquée dans les deux parties de pieds (1,2), la distance entre les perçages latéraux (6) dans les parties de pieds étant quelque peu plus grande que la distance entre les trous traversants opposés (8,9) dans la tige de traction (5).

4. Assemblage de pieds de meuble selon l'une quelconque des revendications 1-3, dans lequel au moins la tige de traction (15) et la vis pointeau (10,11) sont réalisées en acier.

5. Agencement pour assembler bout à bout des parties de pieds de meuble et du type comprenant une tige de traction (5) ayant des moyens aux deux extrémités pour être fixés aux parties de pieds respectives de façon à faire saillie d'un alésage central cylindrique (7), lesdits moyens de fixation, au moins à une extrémité de la tige, comprenant une douille transversale (4) ayant un trou traversant diamétral pour recevoir la tige de traction (5) avec ajustement et avec un trou taraudé pour vis s'étendant axialement entre une extrémité de la douille (4) et ledit trou traversant, ledit trou pour vis recevant une vis pointeau (10,11) pour s'engager dans un évidement (9) à l'extrémité d'un trou traversant radial (8) dans la tige de traction (5),
caractérisé en ce que à la fois la douille (4) et la vis pointeau (10,11) sont réalisées en acier et en ce que la douille (4), opposée à son extrémité de trou de vis, présente une dimension axiale éloignée du trou traversant correspondant sensiblement à la dimension axiale de l'extrémité du trou pour vis, tandis que l'extrémité libre de la tige de traction à l'extérieur de son trou traversant (8), présente une surlongueur remarquable correspondant à la longueur de la douille (4).

6. Agencement selon la revendication 5, dans lequel, également au niveau de l'autre portion d'extrémité de la tige de traction (5), il est muni, de la même manière, d'un trou traversant (8,9), d'une douille (14), et d'une vis pointeau (10,11).
